(19) Europäisches Patentamt
European Patent Office
Office européen des brevets

(11) EP 0 632 046 B1

# (12) EUROPÄISCHE PATENTSCHRIFT

(45) Veröffentlichungstag und Bekanntmachung des Hinweises auf die Patenterteilung:
**02.02.2000 Patentblatt 2000/05**

(51) Int. Cl.[7]: **C07F 9/40**, C08K 5/5333, D06M 13/288

(21) Anmeldenummer: **94108242.2**

(22) Anmeldetag: **27.05.1994**

## (54) Verfahren zur Herstellung von Alkanphoshonsäureoxalkylate

process for the preparation of alkane phosphonic acids oxyalkylates

procédé de préparation d'oxyalkylates d'acides alcane phosphoniques

(84) Benannte Vertragsstaaten:
**AT CH DE FR GB IT LI NL**

(30) Priorität: **27.05.1993 DE 4317707**

(43) Veröffentlichungstag der Anmeldung:
**04.01.1995 Patentblatt 1995/01**

(73) Patentinhaber:
**DR. TH. BÖHME KG**
**CHEM. FABRIK GMBH & CO.**
**D-82538 Geretsried (DE)**

(72) Erfinder: **Klein, Reinhard, Dr.**
**D-82431 Kochel am See (DE)**

(74) Vertreter:
**Fehners, Klaus Friedrich,**
**Dipl.-Ing., Dipl.-Wirtsch.-Ing. et al**
**Patentanwälte**
**Geyer, Fehners & Partner**
**Perhamerstrasse 31**
**80687 München (DE)**

(56) Entgegenhaltungen:
**EP-A- 0 154 948** **EP-A- 0 327 092**
**FR-A- 1 370 371**

- **CHEMICAL ABSTRACTS, vol. 087, no. 17, 24. Oktober 1977, Columbus, Ohio, US; abstract no. 135918, HASHIBA I ET AL 'Substituted phosphonic acid derivatives' & JP---7 731 031 (NISSAN CHEMICAL INDUSTRIES, LTD.;JAPAN) 9. März 1977**
- **CHEMICAL ABSTRACTS, vol. 097, no. 4, 26. Juli 1982, Columbus, Ohio, US; abstract no. 024306, YANCHUK N I 'Formation reaction of phosphorus-containing polyurethanes' & VOPR. KHIM. KHIM. TEKHNOL. (VKKCAJ,03214095);81; VOL.63,; PP.66-9, USSR (SU)**
- **ZH. OBSHCH. KHIM. (ZOKHA4,0044460X);81; VOL.51 (3); PP.579-84, KAZAN. KHIM. TEKHNOL. INST.;KAZAN; USSR Novikov V F et al 'Study of intermolecular interactions of organophosphorus compounds with proton-donor and proton-acceptor substances'**
- **CHEMICAL ABSTRACTS, vol. 085, no. 1, 5. Juli 1976, Columbus, Ohio, US; abstract no. 005126, COSTISELLA B ET AL 'Reaction of epoxides with phosphonic acid monoesters and phosphonic acids' & J. PRAKT. CHEM. (JPCEAO);75; VOL.317 (5); PP.798-806, DAW;ZENTRALINST. ORG. CHEM.; BERLIN-ADLERSHOF; E. GER.**
- **CHEMICAL ABSTRACTS, vol. 080, no. 9, 4. März 1974, Columbus, Ohio, US; abstract no. 048111, ARBUZOV B A ET AL 'Reaction of 2-oxo-2-chl oro-3,3,5-trimethyl-1,2-oxa-4-phospholene with ethylene glycol' & ZH. OBSHCH. KHIM. (ZOKHA4);73; VOL.43 (10); PP.2134-7, INST. ORG. FIZ. KHIM. IM. ARBUZOVA;KAZAN; USSR**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

- **CHEMICAL ABSTRACTS, vol. 097, no. 2, 12. Juli 1982, Columbus, Ohio, US; abstract no. 008147, PANFILOVA Z F ET AL 'Synthesis and surface-active properties of polyethylene glycol alkanephosphonates' & DOKL. AKAD. NAUK UZB. SSR (DANUAO,03668614);80; (2); PP.52-4, FARM. INST.;TASHKENT; USSR (SU)**
- **CHEMICAL ABSTRACTS, vol. 072, no. 13, 30. März 1970, Columbus, Ohio, US; abstract no. 067047, TUZHIKOV O I ET AL 'Interaction of methylphosphonic acid with.alpha.-oxides' & KHIM. KHIM. TEKHNOL. (21WWAB);68; PP.42-6, USSR**
- **MAGN. RESON. CHEM. (MRCHEG,07491581);93; VOL.31 (2); PP.212-13, UNIV. AIX-MARSEILLE III;FAC. SCI. SAINT JEROME; MARSEILLE; 13397; FR. (FR) Vincent E J et al 'Carbon-13 and phosphorus-31 NMR study of some crown ethers containing phosphorus atoms'**

## Beschreibung

Die Verwendung antimontrioxid- und halogenfreier Flammschutzmittel in der Textil- und Kunststoffindustrie erfuhr in den letzten Jahren einen ungeahnten Aufschwung. Die Automobil- und Flugzeugindustrie als Großabnehmer von flammgeschützten Textilien und Kunststoffen erkannte die Vorzüge und Notwendigkeiten von halogenfreien und antimonfreien Flammschutzmitteln bei der Ausrüstung von Fahrgastzellen. Als Mittel der Wahl haben sich Phosphonate wie die Produkte Amgard CU$^{(R)}$ oder FIREX 6048$^{(R)}$ im Markt etabliert. Das Produkt Amgard CU$^{(R)}$ basiert auf dem US Patent 3,789,091 (15.11.71) bzw. 3,849,368 (19.11.74). Die Herstellung des Produktes geschieht durch Erhitzen von Methanphosphonsäuredimethylester (DMMP) mit bicyclischem Trimethylolpropanphosphit auf Temperaturen zwischen 188°C und 240°C unter Abspaltung von Methanol. Die Darstellung dieses Produktes scheint nicht ganz ungefährlich zu sein. Im Jahre 1991 ereignete sich ein tragisches Explosionsunglück in der Produktionsstätte von Amgard CU, was die potentielle Gefährlichkeit des Herstellungsverfahrens unterstreicht. Dies und die jüngsten Unglücke in der chemischen Industrie zeigen, wie wesentlich der Bedarf an kontrollierten und beherrschbaren Verfahren ist.

Aus der FR-A-1 370 371 ist die Herstellung von Estern $\alpha$, $\beta$ - ungesättigten Alkenphosphonsäuren bekannt, die durch Umsetzen von Phosphonsäuren mit Alkylenoxiden bei 10°C bis 180°C unter Verwendung eines Lösungsmittels erhalten werden.

Die Umsetzung anorganischer Säuren mit Alkylenoxiden ist im Prinzip bekannt. So läßt sich beispielsweise Phosphorsäure mit Ethylenoxid im flüssigen Aggregatzustand bel Temperaturen zwischen 50 und 60°C zu Phosphorsäureoxethylaten mit unterschiedlichen Oxethylierungsgraden umsetzen:

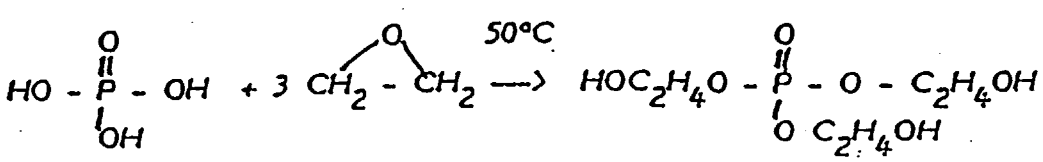


Die Darstellung von Alkanphosphonsäureoxethylaten durch Umsetzung von Alkanphosphonsäure mit Alkylenoxid verläuft nach demselben Reaktionsschema:

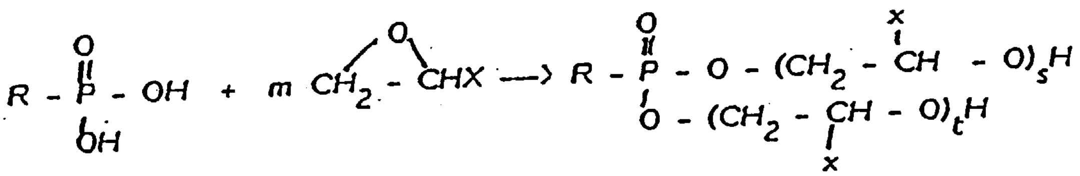

mit X = H, $CH_3$ oder $C_2H_5$ und R = $C_nH_{2n+1}$, $C_nH_{2n-1}$ (cyclisch oder offenkettig), wobei n eine ganze Zahl von 1-8 und m = 1 bis 5 und s + t = m ist

Allerdings läuft diese Reaktion nicht unter den gleichen Bedingungen ab: Es wurde gefunden, daß - wahrscheinlich aufgrund der höheren Festpunkte der Alkanphosphonsäuren gegenüber der Phosphorsäure (Methanphosphonsäure 104°C, Ethanphosphonsäure 58°C, Oktanphosphonsäure 99°C) - eine wesentlich höhere Reaktionstemperatur für die chemische Umsetzung im flüssigen Aggregatszustand unter Ausschluß von Lösungsmitteln erforderlich ist.

Die dafür notwendigen Temperaturen bewegen sich im Bereich zwischen 120 und 140°C. Diese Fahrweise begünstigt eine stetige und vollständige Anlagerung von Alkylenoxid an die vorgelegte Alkanphosponsäure, was durch Beobachtung der Druckverhältnisse im Reaktionskessel in einfacher Weise überwacht werden kann. Die angegebenen Reak-tionstemperaturen bewirken allerdings einen erheblichen korrosiven Angriff der Alkanphosphonsäuren auf das Kesselmaterial, welches im Regelfall bel Alkoxylierungsreaktionen aus V4A-Stahl besteht. Emaillierte Reaktionskessel sind für Oxalkylierungsreaktionen ungeeignet, da meist mit Natriumhydroxid katalysiert wird, das die Beschichtungsoberfläche chemisch angreifen würde.

Der vorliegenden Erfindung liegt somit die Aufgabe zugrunde, ein Verfahren zur Herstellung von Alkanphosphonsäureoxalkylaten bereitzustellen, bei dem ein korrosiver Angriff auf des Kesselmaterial aus V4A-Stahl nicht bewirkt wird.

Erfindungsgemäß wird dies erreicht durch ein Verfahren zur Herstellung eines Alkanphosphonsäureoxalkyla-

tes der allgemeinen Formel:

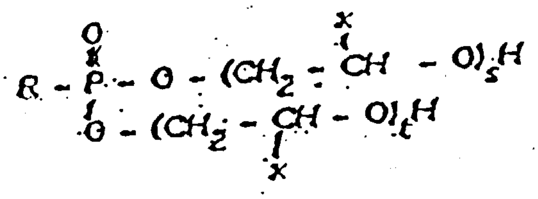

mit X = H, $CH_3$ oder $C_2H_5$ und R = $C_nH_{2n+1}$, $C_nH_{2n-1}$ (cyclisch oder offenkettig), wobei n eine ganze Zahl von 1-8 und m = 1 bis 5 und s + t = m ist, des sich dadurch auszeichnet, daß die entsprechende Alkanphosphonsäure mit dem entsprechenden Alkylenoxid gemäß der folgenden Gleichung

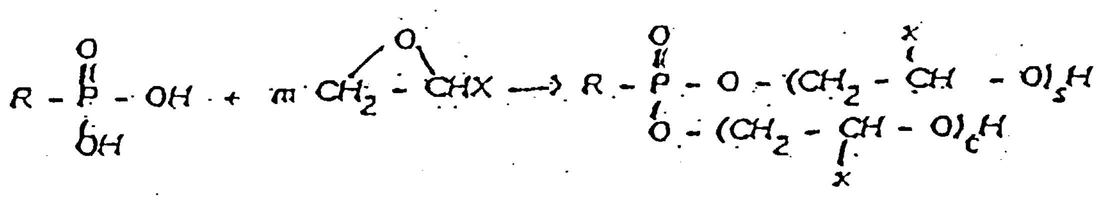

in Gegenwart von Alkanphosphonsäureoxalkylat als Lösungsmittel bei einer Temperatur von 40°C bis 60°C umgesetzt wird.

Die Schwierigkeiten können somit erfindungsgemäß in der Weise überwunden werden, daß als Reaktionsmedium für die Oxalkylierungsreaktion ein Gemisch aus Alkanphosphonsäureoxethylat und Alkanphosphonsäure verwendet wird. Die Oxalkylierungsreaktion kommt nach einer Belegung mit durchschnittlich 3 Mol Alkylenoxid pro Mol Alkanphosphonsäure zum Stillstand. Ein weiteres Kettenwachstum findet in der Regel nicht statt. Alkanphosphonsäureoxalkylat, welches bis weit unter Raumtemperatur flüssig ist, dient hierbei der Alkanphosphonsäure als Lösungsmittel und ermöglicht die Reaktion zwischen Alkanphosphonsäure und Alkylenoxid bei relativ tiefen Temperaturen zwischen 40 und 60°C. Mischungsverhältnisse Alkanphosphonsäure zu Alkanphosphonsäureoxalkylaten können zwischen 2:1 und 1:2 liegen, je nach Länge der Alkylkette der Alkanphosphonsäure.

Besonders bevorzugte Beispiele für die einzusetzenden Alkanphosphonsäuren sind Methanphosphonsäure, Isobutanphosphonsäure, Octanphosphonsäue und Ethyl-Cyclohexanphosphonsäure.

Bei diesen Temperaturen wird das Kesselmaterial aus V4A-Stahl korrosiv nicht angegriffen.

**<u>Beispiel 1</u>**

**Darstellung von Methanphosphonsäureoxethylat (3 EO)**

In einem Druckkessel, wie er für Oxalkylierungsreaktionen üblich ist, wird 2,7 kg Methanphosphonsäureoxethylat (3 EO) vorgelegt. Unter Rühren wird 4,05 kg geschmolzene Methanphosphonsäure (T > 104°C) dazugegeben, wobei man eine Suspension mit einer Temperatur von etwa 70°C erhält. Der Kessel wird verschlossen, zweimal mit Stickstoff gespült und auf 50°C abgekühlt. Über eine Vorlage wird in kleinen Schritten 5,57 kg Ethylenoxid in die Methanphosphonsäure-Methanphosphonsäureoxethylat-Suspension eingeleitet. Bei der stark exothermen Reaktion werden Drücke bis 150 kPa (1,5 bar) im Gasraum des Kessels gemessen. Infolge intensiver Kühlung schwankt die Reaktionstemperatur zwischen 40°C und 60°C. Nach Zugabe des gesamten Ethylenoxids wird bis zur Druckkonstanz nachgerührt (30 - 60 min).

Die Reaktionstemperatur sinkt dabei auf Raumtemperatur. Man erhält ein wasserklares, farbloses, niedrig viskoses Produkt mit einer Säurezahl von 18.

| Elementaranalyse: | |
|---|---|
| Theorie: | 13,58% P |

(fortgesetzt)

| Elementaranalyse: | |
|---|---|
| gefunden: | 13,93% P |

**Beispiel 2**

**Darstellung von Methanphosphonsäureoxpropylat (3PO)**

In einem Oxalkylierungsreaktor werden 2,88 kg Methanphosphonsäure und 2,88 kg Methanphosphonsäureoxpropylat (3 PO) vorgelegt. Nach zweimaligem Spülen mit Stickstoff wird der Kessel auf 50°C erwärmt und in der Weise mit Propylenoxid beschickt, daß der im Dampfraum herrschende Maximaldruck 150 kPa (1,5 bar) nicht übersteigt. Die Temperatur des Reaktionsgemisches wird über ein Kühlsystem zwischen 40 und 60°C eingeregelt. Nach Zugabe des gesamten Propylenoxids wird bis zur Druckkonstanz nachgerührt (ca. 1 h).
Man erhält ein wasserklares, farbloses, niedrig viskoses Produkt mit einer Säurezahl von 1,7.

| Elementaranalyse: | |
|---|---|
| Theorie: | 11,46% P |
| gefunden: | 12,12% P |

**Beispiel 3**

**Flammhemmende Prüfung nach DIN 54 336**

| | |
|---|---|
| Material A: | PES-Gardine |
| Material B: | PES-Wirkware |
| Materialvorbehandlung: | Flotte 70 g/l Produkt<br>pH 6,5 (mit Dinatriumhydrogenphosphat eingestellt) |
| Trocknung: | 135°C |
| Fixieren: | 1 mm bei 185°C<br>mit Wasser 1 x nachgespült, getrocknet bei 105°C |

| | Nachbrennzeit in sec | Glimmzeit in sec | zerstörte Strecke in cm | Erreichen der 1. marke | brennendes Abtropfen |
|---|---|---|---|---|---|
| **Material A:** | | | | | |
| Amgard CU(R) | 0 | 0 | 8,5 | nein | 1x/2x nicht |
| Flammschutzmittel nach Beispiel 1 | 0 | 0 | 8,0 | nein | 1x/2x nicht |
| Flammschutzmittel nach Beispiel 2 | 0 | 0 | 8,0 | nein | 3x nicht |
| **Material B:** | | | | | |
| Amgard CU(R) | 24 | 0 | 16,0 | ja | 4x/2x nicht |
| Flammschutzmittel nach Beispiel 1 | 30 | 0 | 18,0 | ja | 4x/2x nicht |
| Flammschutzmittel nach Beispiel 2 | 20 | 0 | 15,0 | ja | 3x/3x nicht |

**Beispiel 4**

**Flammhemmende Prüfung nach DIN 54 336**

| | |
|---|---|
| Material | PES-Webware, royalblau |
| Materialvorbehandlung: | Flotte 70 g/l Produkt<br>pH 6,5 (mit Dinatriumhydrogenphosphat eingestellt) |
| Trocknung: | 135°C |
| Fixieren: | 1 min bei 185°C<br>mit Wasser 1 x nachgespült, getrocknet bei 105°C |

| | Nachbrennzeit in sec | Glimmzeit in sec | zerstörte Strecke in cm | Erreichen der 1. marke | brennendes Abtropfen |
|---|---|---|---|---|---|
| Amgard CU(R) | 2 | 0 | 8,0 | nein | 2x |
| Flammschutzmittel nach Beispiel 1 | 0 | 0 | 8,0 | nein | 2x nicht |
| Flammschutzmittel nach Beispiel 2 | 0 | 0 | 8,0 | nein | 1x/1x nicht |

**Beispiel 5**

**Flammhemmende Prüfung nach DIN 54 336**

| | |
|---|---|
| Material A: | PES-Kettwirkware, grau |
| Material B: | PA-Kettwirkware, hellblau |
| Materialvorbehandlung: | Flotte 70 g/l Produkt<br>pH 6,5 (mit Dinatriumhydrogenphosphat eingestellt) |
| Trocknung: | 135°C |
| Fixieren: | 1 min bei 185°C<br>mit Wasser 1 x nachgespült, getrocknet bei 105°C |

| | Nachbrennzeit in sec | Glimmzeit in sec | zerstörte Strecke in cm | Erreichen der 1. marke | brennendes Abtropfen |
|---|---|---|---|---|---|
| **Material A:** | | | | | |
| Amgard CU(R) | 3 | 0 | 7,0 | nein | 1x/1x nicht |
| Flammschutzmittel nach Beispiel 1 | 1 | 0 | 6,0 | nein | 1x/1x nicht |
| Flammschutzmittel nach Beispiel 2 | 3 | 0 | 6,0 | nein | 2x |
| **Material B:** | | | | | |
| Amgard CU(R) | 0 | 0 | 6,0 | nein | 2x nicht |
| Flammschutzmittel nach Beispiel 1 | 0 | 0 | 9,0 | nein | 2x nicht |
| Flammschutzmittel nach Beispiel 2 | 0 | 0 | 9,0 | nein | 2x nicht |

**Beispiel 6**

**Flammhemmende Prüfung nach DIN 54 336**

| | |
|---|---|
| Material A: | PA-Mikrofasergewebe |
| Material B: | PES-Kettsamt |
| Materialvorbehandlung: | Foulardieren bei Raumtemperatur |
| Flottenaufnahme: | Material A 80 %; 70 g/l Flammschutzmittel<br>Material B 100 %; 50 g/l Flammschutzmittel |
| Trocknung: | 130°C |
| Fixieren: | 30 min bei 185°C |

| | Nachbrennzeit in sec | Glimmzeit in sec | zerstörte Strecke in cm | Erreichen der 1. Meßmarke | brennendes Abtropfen |
|---|---|---|---|---|---|
| **Material A:** | | | | | |
| Flammschutzmittel nach Beispiel 1 | 0 | 0 | 10,0 | nein | nein |
| Flammschutzmittel nach Beispiel 2 | 0 | 0 | 7,5 | nein | nein |
| **Material B:** | | | | | |
| Flammschutzmittel nach Beispiel 1 | 0 | 0 | 6,3 | nein | nein |
| Flammschutzmittel nach Beispiel 2 | 0 | 0 | 6,5 | nein | nein |

**Patentansprüche**

1. Verfahren zum Herstellen eines Alkanphosphonsäureoxalkylates der allgemeinen Formel:

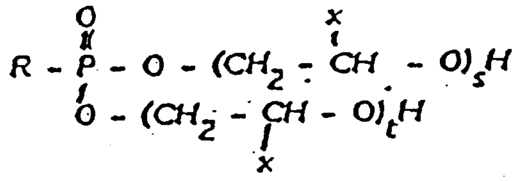

mit X=H, $CH_3$ oder $C_2H_5$ und R=$C_nH_{2n+1}$, $C_nH_{2n-1}$ (cyclisch oder offenkettig), wobei n eine ganze Zahl von 1-8 und m=1-5 und s+t=m ist, dadurch gekennzeichnet, daß die entsprechende Alkanphosphonsäure mit dem entsprechenden Alkylenoxid gemäß der folgenden Gleichung

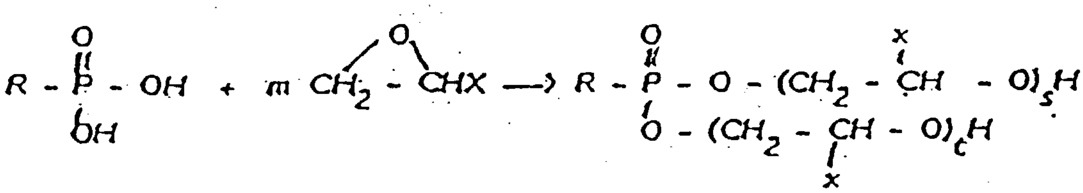

in Gegenwart von Alkanphosphonsäureoxalkylat als Lösungsmittel bei einer Temperatur von 40°C-60°C umgesetzt wird,

2. Verfahren nach Anspruch 1, dadurch gekennzeichnet, daß des Mischungsverhältnis von vorgelegter Alkanphosphonsäure zum vorgelegten Alkanphosphonsäureoxalkylat im Bereich von 2:1 bis 1:2 (Molverhältnis) liegt.

**Claims**

1. Process for producing an alkane phosphonic acid oxyalkylate corresponding to the general formula:

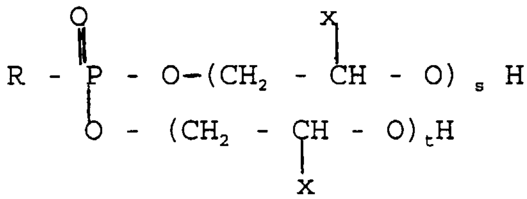

wherein X = H, $CH_3$ or $C_2H_5$ and R = $C_nH_{2n+1}$, $C_nH_{2n-1}$ (cyclic or open-chained) , wherein n is an integer from 1 to 8 and m = 1 to 5 and s + t = m , characterised in that the corresponding alkane phosphonic acid is reacted with the corresponding alkylene oxide according to the following equation

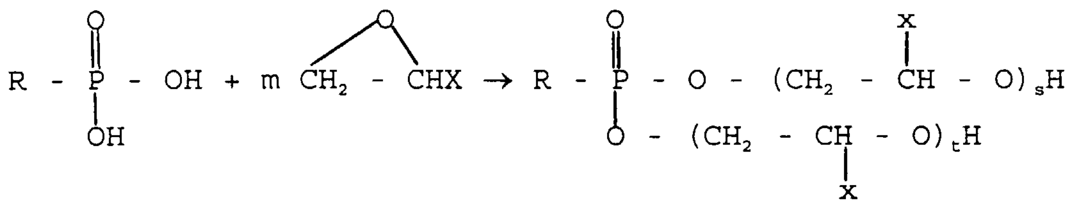

in the presence of alkane phosphonic acid oxyalkylate as solvent at a temperature of 40° to 60°.

2. Process according to claim 1, characterised in that the mixing ratio of alkane phosphonic acid presented to alkane

phosphonic acid oxyalkylate presented lies in the range of 2:1 to 1:2 (molar ratio).

**Revendications**

1. Procédé de préparation d'un produit d'alcoxylation d'un acide alcanephosphonique de formule générale :

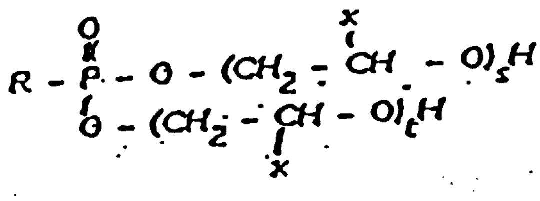

dans laquelle X = H, $CH_3$ ou $C_2H_5$, et R est $C_nH_{2n+1}$, $C_nH_{2n-1}$ (cyclique ou à chaîne ouverte), n étant un nombre entier de 1 à 8, et m = 1 à 5 et s + t = m , caractérisé en ce qu'on fait réagir à une température de 40 à 60°C, en présence d'un produit d'alcoxylation d'un acide alcanephosphonique servant de solvant, l'acide alcanephosphonique correspondant avec l'oxyde d'alkylène correspondant, selon l'équation suivante :

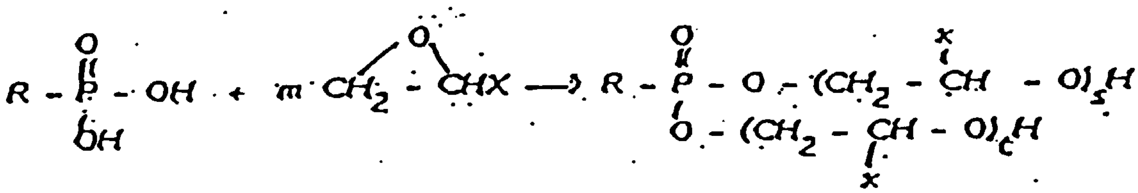

2. Procédé selon la revendication 1, caractérisé en ce que le rapport de mélange de l'acide alcanephosphonique déjà en place au produit d'alcoxylation d'un acide alcanephosphonique déjà en place est compris entre 2:1 et 1:2 (rapport en moles).